# FASCICULE DE BREVET EUROPEEN

(11) **EP 3 431 861 B1**
(45) Date de publication et mention de la délivrance du brevet: **05.05.2021**
(21) Numéro de dépôt: 18183262.7
(22) Date de dépôt: 12.07.2018
(51) Int. Cl.: F21S 45/49

(54) **DISPOSITIF LUMINEUX POUR VEHICULE AUTOMOBILE**
LEUCHTMODUL FÜR KRAFTFAHRZEUG
LIGHT DEVICE FOR A MOTOR VEHICLE

(30) Priorité: 17.07.2017 FR 1756738
(43) Date de publication de la demande: 23.01.2019
(73) Titulaire: Valeo Vision Belgique, 7822 Meslin l'Evêque (BE)
(72) Inventeur: DINANT, Franck, 7822 MESLIN L'EVEQUE (BE); SACCHET, Dirkie, 7822 MESLIN L'EVEQUE (BE); DEBERT, Florestan, 7822 MESLIN L'EVEQUE (FR)
(74) Mandataire: Valeo Visibility

(56) Documents cités:
- WO-A1-2011/060319
- WO-A1-2015/154648
- DE-A1-102005 044 447
- DE-A1-102006 017 718
- DE-A1-102015 223 143
- US-A1- 2016 290 621

## Description

### DOMAINE TECHNIQUE DE L'INVENTION

La présente invention concerne un dispositif lumineux pour véhicule automobile.

Elle trouve une application particulière mais non limitative dans les véhicules automobiles.

### ARRIÈRE-PLAN TECHNOLOGIQUE DE L'INVENTION

Un dispositif lumineux pour véhicule automobile comprend de manière connue de l'homme du métier, par exemple du document US2016/290621 ;
- un boîtier ;
- un dissipateur thermique fixé au boîtier par une interface de fixation mécanique telle que des vis ou un clip de fixation, ledit dissipateur thermique comprenant une pluralité d'ailettes, classiquement plus de deux ; selon US2016/290621, le dissipateur peut être en tôle et surmoulé
- une carte à circuit imprimé ;
- une source lumineuse disposée sur ladite carte à circuit imprimé ;
- un composant électronique pour le pilotage de l'alimentation électrique de ladite source lumineuse, disposé également sur ladite carte à circuit imprimé. La carte à circuit imprimé est logée dans ledit boîtier.

Un inconvénient de cet état de la technique est que le dispositif lumineux présente un encombrement et un poids important.

Dans ce contexte, la présente invention vise à résoudre l'inconvénient précédemment mentionné.

A cette fin l'invention propose un dispositif lumineux pour véhicule automobile, ledit dispositif lumineux comprenant :
- un boitier ;
- un dissipateur thermique en tôle surmoulé avec ledit boitier ;
- au moins une source lumineuse ;
- un dispositif de pilotage de l'alimentation électrique de ladite au moins une source lumineuse disposé dans ledit boitier et électriquement connecté à ladite source lumineuse ;
- un élément optique adapté pour coopérer avec des rayons lumineux émis par ladite au moins une source lumineuse,
   le dispositif lumineux est remarquable en ce que la source lumineuse est disposée directement sur ledit dissipateur thermique et ledit dispositif de pilotage comprend un support électronique disposé dans ledit boîtier, ce support électronique reposant sur une surface d'accueil du boitier.

Ainsi, comme on va le voir en détail ci-après, on réduit le volume du dispositif lumineux grâce d'une part au surmoulage du dissipateur thermique avec ledit boîtier qui permet de supprimer l'interface de fixation, et grâce d'autre part à la disposition de la source lumineuse directement sur le dissipateur thermique. En effet, le fait de placer la source lumineuse directement en contact avec le dissipateur thermique permet d'améliorer les performances thermiques et permet donc de réduire le volume du dissipateur thermique lui-même.

Selon des modes de réalisation non limitatifs, le dispositif lumineux peut comporter en outre une ou plusieurs caractéristiques supplémentaires parmi les suivantes :
Selon l'invention, ledit dissipateur thermique est en tôle.

Selon un mode de réalisation non limitatif, la tôle est en aluminium.

Selon un mode de réalisation non limitatif, ledit dispositif lumineux est un projecteur et/ou un feu antibrouillard.

Selon un mode de réalisation non limitatif, ledit dissipateur thermique comprend une partie centrale et deux parties latérales.

Selon un mode de réalisation non limitatif, ladite partie centrale comprend une épaisseur sensiblement égale à 2mm, et les deux parties latérales comprennent une épaisseur sensiblement égale à 1.8mm.

Selon un mode de réalisation non limitatif, ledit élément optique est une lentille et/ou un réflecteur et/ou un guide de lumière.

Selon un mode de réalisation non limitatif, ladite au moins une source lumineuse est une source lumineuse à semi-conducteur.

Selon un mode de réalisation non limitatif, ladite au moins une source lumineuse à semi-conducteur fait partie d'une diode électroluminescente.

Selon un mode de réalisation non limitatif, ledit dispositif lumineux comprend une pluralité de sources lumineuses.

### BREVE DESCRIPTION DES FIGURES

L'invention et ses différentes applications seront mieux comprises à la lecture de la description qui suit et à l'examen des figures qui l'accompagnent.
- la figure 1 représente une vue éclatée en perspective d'un dispositif lumineux pour véhicule automobile, selon un mode de réalisation non limitatif de l'invention ;
- la figure 2 représente une vue assemblée du dispositif lumineux de la figure 1, selon un mode de réalisation non limitatif ;
- la figure 3 représente une vue d'un dissipateur thermique du dispositif lumineux des figures 1 et 2, selon un mode de réalisation non limitatif ;
- la figure 4 représente une vue du dissipateur thermique de la figure 3 sur lequel sont montées une pluralité de sources lumineuses, selon un mode de réalisation non limitatif ;
- la figure 5 représente une vue un dispositif de pilotage du dispositif lumineux des figures 1 et 2, selon un mode de réalisation non limitatif ;
- la figure 6 représente le dispositif de pilotage de l'alimentation électrique de la figure 5 électriquement relié aux sources lumineuses de la figure 4, selon un mode de réalisation non limitatif ;
- la figure 7 représente une vue de dessus d'un boîtier du dispositif lumineux des figures 1 et 2, selon un mode de réalisation non limitatif ;
- la figure 8 représente un vue de côté du boîtier du dispositif lumineux des figures 1 et 2, selon un mode de réalisation non limitatif ;
- la figure 9 représente le boîtier des figures 7 et 8 avec lequel le dissipateur thermique de la figure 3 est surmoulé, selon un mode de réalisation non limitatif ;
- la figure 10 représente une vue arrière du boîtier de la figure 9 ;
- la figure 11 représente le boîtier et le dissipateur thermique des figures 9 et 10, dissipateur thermique sur lequel sont disposées des sources lumineuses, selon un mode de réalisation non limitatif ;
- la figure 12 représente le boîtier, le dissipateur thermique et les sources lumineuses de la figure 11, sources lumineuses qui sont reliées électriquement au dispositif de pilotage des figures 5 et 6, selon un mode de réalisation non limitatif ;
- la figure 13 représente le boîtier, le dissipateur thermique, les sources lumineuses et le dispositif de pilotage de la figure 12, boîtier sur lequel est monté un élément optique, selon un mode de réalisation non limitatif ;
- la figure 14 représente le boîtier, le dissipateur thermique, les sources lumineuses, le dispositif de pilotage et l'élément lumineux de la figure 13, boîtier sur lequel est monté un masque ; et
- la figure 15 est une vue en coupe du dispositif lumineux des figures 1 et 2.

### DESCRIPTION DE MODES DE REALISATION DE L'INVENTION

Les éléments identiques, par structure ou par fonction, apparaissant sur différentes figures conservent, sauf précision contraire, les mêmes références.

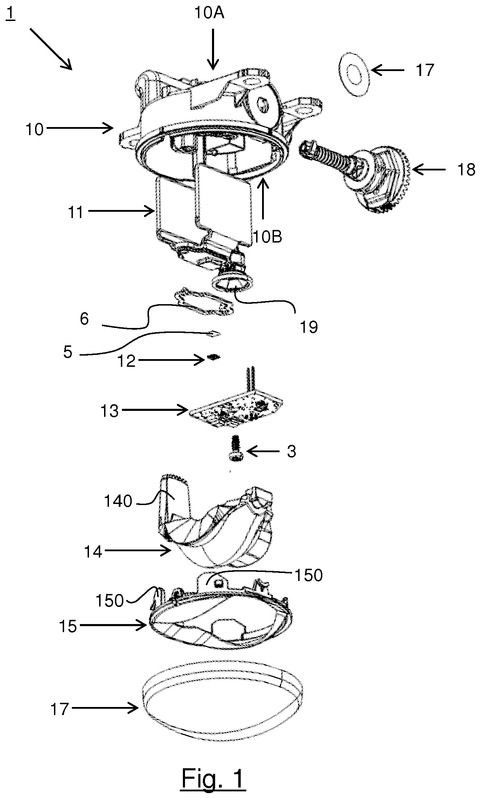

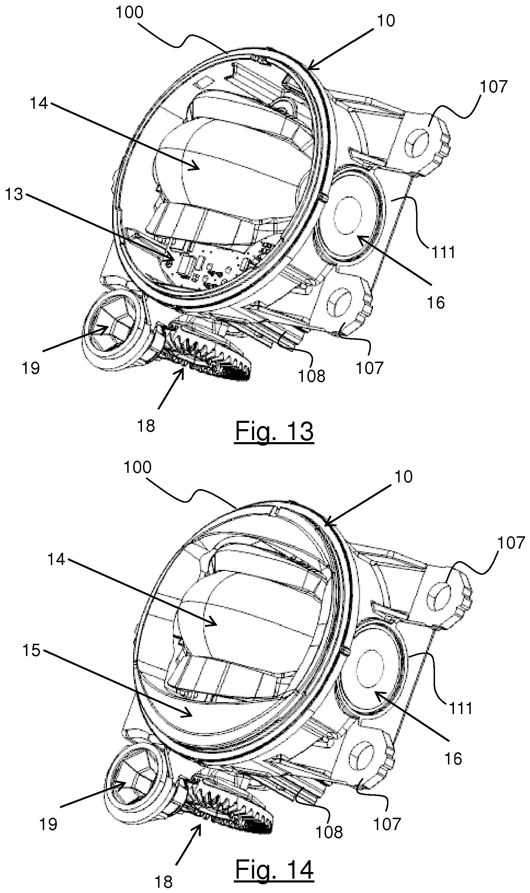

Le dispositif lumineux 1 pour véhicule automobile selon l'invention est décrit en référence aux figures 1 à 15.

Dans un mode de réalisation non limitatif, le dispositif lumineux 1 est un projecteur et/ou un feu antibrouillard pour véhicule automobile.

Par véhicule automobile, on entend tout type de véhicule motorisé.

Dans des modes de réalisation non limitatifs, un projecteur est adapté pour assurer une fonction photométrique :
- dite « High Beam » en anglais pour réaliser un feu de route ; et/ou
- dite « Low Beam » en anglais pour réaliser, par exemple, un feu de croisement ; et/ou
- dite DRL pour réaliser un feu diurne ; et/ou
- dite « Turn Indicator » en anglais pour réaliser un feu de signalisation. Tel qu'illustré sur la figure 1, le dispositif lumineux 1 comprend :
- un boitier 10 ;
- un dissipateur thermique 11 ;
- au moins une source lumineuse 12 ;
- un dispositif de pilotage 13 de l'alimentation électrique de ladite au moins une source lumineuse 12 ;
- un élément optique 14.

Dans un mode de réalisation non limitatif, le dispositif lumineux 1 comprend en outre un masque 15 et une glace 17.

Dans un mode de réalisation non limitatif, le dispositif lumineux 1 comprend en outre une vis d'engrenage 18, appelée également vis de réglage.

Dans un mode de réalisation non limitatif, le dispositif lumineux 1 comprend une pluralité de sources lumineuses 12. Ce mode de réalisation est pris comme exemple non limitatif dans la suite de la description.

Les éléments du dispositif lumineux 1 sont décrits en détail ci-après.

### • Boîtier 10

Le boîtier 10 est illustré sur les figures 1, 2, et 8 à 13.

Dans un mode de réalisation non limitatif, le boîtier 10 est en matériau plastique. Dans un exemple non limitatif, le matériau plastique est du PCSAN (Polycarbonate et Styrène-Acrylonitrile) chargé en fibres de verre.

Dans un mode de réalisation non limitatif, le boîtier 10 comprend une forme sensiblement arrondie. Cela permet d'obtenir par exemple un feu antibrouillard de forme standard.

Tel qu'illustré sur la figure 1, le boîtier 10 permet d'accueillir les sources lumineuses 12, le dispositif de pilotage 13, l'élément optique 14 et le masque 15. Il sert ainsi de protection pour les sources lumineuses 12 et le dispositif de pilotage 13 contre des infiltrations de poussière ou d'eau.

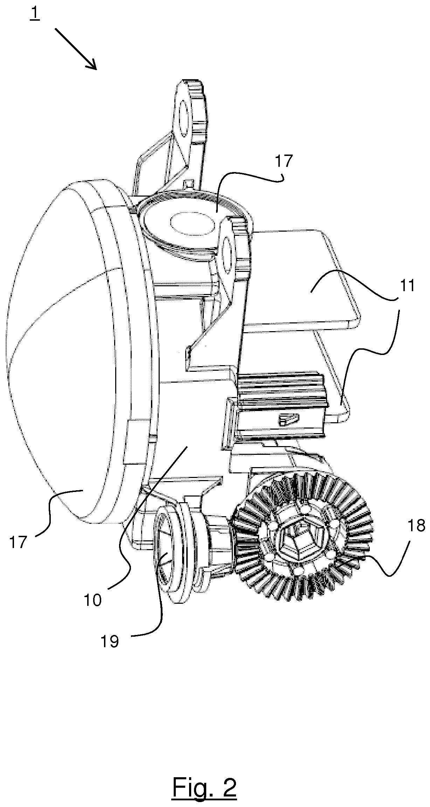

Tel qu'illustré sur la figure 1 ou la figure 2, le boîtier 10 est fermé d'un côté 10B par la glace 17. Le dissipateur thermique 11 dépasse en partie de l'autre côté 10A du boîtier 10 permettant ainsi à la chaleur dégagée notamment par les sources lumineuses 12 d'être évacuée hors du boîtier 10 via les parties latérales 111 (décrites plus loin) du dissipateur thermique 11.

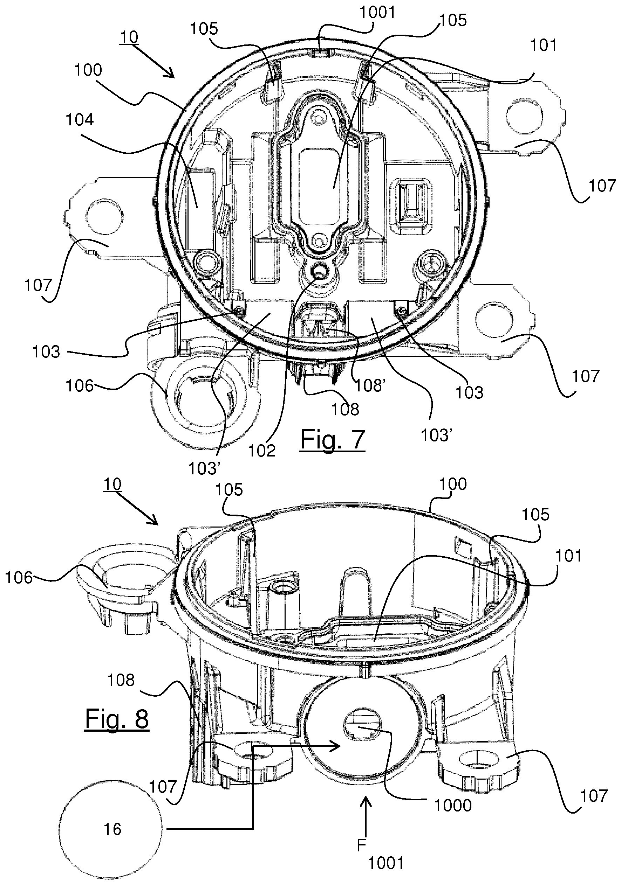

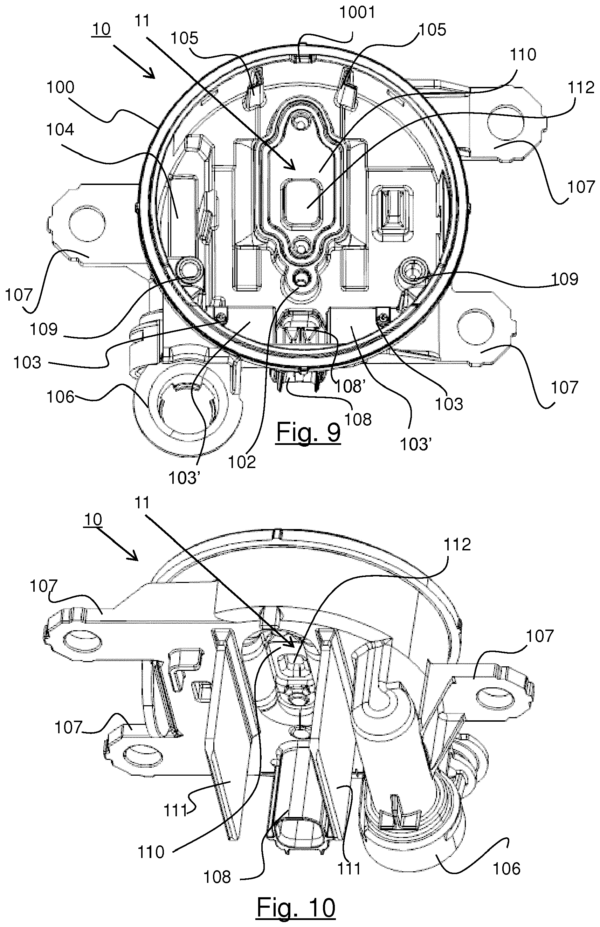

Tel qu'illustré sur la figure 7, le boîtier 10 comprend une ouverture 101 dans laquelle une partie centrale 110 du dissipateur thermique 11 est logée après un surmoulage du boîtier 10 sur ledit dissipateur thermique 11 tel qu'illustré sur la figure 9.

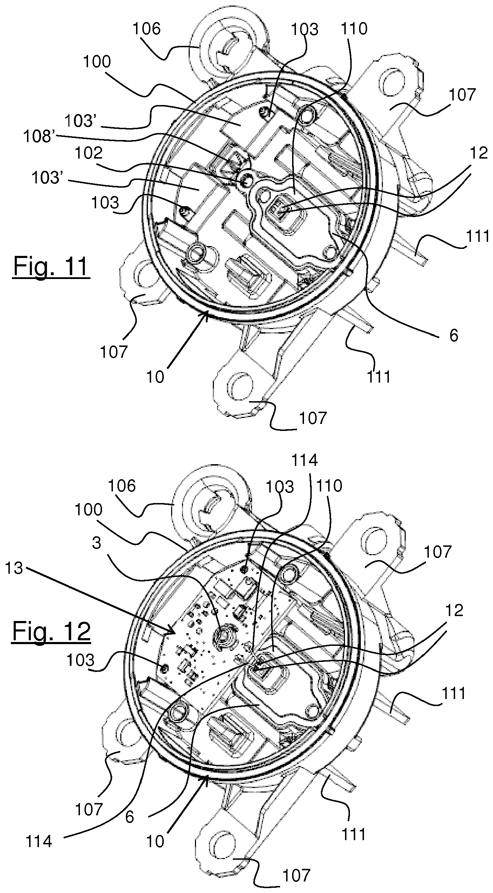

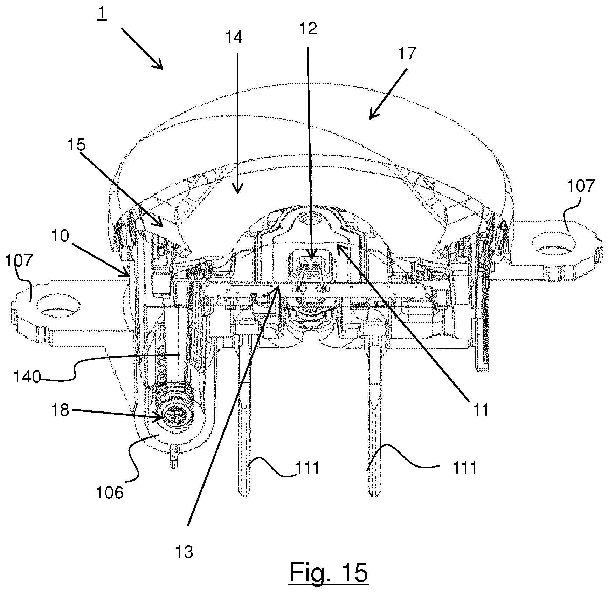

Tel qu'illustré sur la figure 7, le boîtier 10 comprend en outre :
- un orifice de fixation 102 adapté pour fixer le dispositif de pilotage 13. Cet orifice est adapté pour recevoir une vis de fixation 3 (illustrée sur les figures 1 et 12) ;
- au moins un dispositif de positionnement 103 du dispositif de pilotage 13. Dans un exemple non limitatif, il existe deux dispositifs de positionnement 103. Dans un mode de réalisation non limitatif, un dispositif de positionnement 103 est un pion.
- un orifice de passage 104 adapté pour laisser passer une portion d'engrenage 140 (illustrée sur la figure 1 et sur la figure 15) de l'élément optique 14 ;
- au moins un dispositif de fixation 105 du masque 15. Dans un exemple non limitatif, il existe quatre dispositifs de fixation 105. Dans un mode de réalisation non limitatif, un dispositif de fixation 105 est une glissière adaptée pour recevoir une patte 150 (illustrée sur la figure 1) du masque 15 qui se glisse dans ladite glissière.
- une cavité 106 adaptée pour recevoir la vis d'engrenage 18, tel qu'illustré également sur les figures 12 et 15.
- au moins une patte de fixation 107 sur le véhicule automobile. Dans un exemple non limitatif illustré, il y a trois pattes de fixation ;
- un dispositif de positionnement 1001 de la glace 17. Dans un mode de réalisation non limitatif, ce dispositif de positionnement 1001 est un poka yoke ;
- une contrepartie connecteur 108 adaptée pour accueillir un connecteur client (non illustré) du véhicule automobile et des broches d'un connecteur d'alimentation 132 du dispositif de pilotage 13 qui seront connectées audit connecteur client. Cette contrepartie connecteur 108 comprend un accès 103' à l'intérieur du boîtier 10 adapté pour insérer les broches du connecteur d'alimentation 132 du dispositif de pilotage 13 ;
- une surface d'accueil 103', illustrée également sur les figures 9 et 11, adaptée pour recevoir le dispositif de pilotage 13. On notera que ladite surface d'accueil 103' se situe de part et d'autre de l'accès 108' à la contrepartie connecteur 108.

Tel qu'illustré sur la figure 8, dans un mode de réalisation non limitatif, le boîtier 10 comprend en outre un orifice d'entrée 1000 adapté pour laisser passer un flux d'air F qui va pouvoir circuler dans le boîtier 10 et éviter ainsi toute condensation à l'intérieur dudit boîtier 10. La membrane hydrophobe 16 est disposée sur ledit orifice d'entrée 1000 pour protéger l'intérieur du boîtier 10 contre des infiltrations de liquide, tel que de l'eau. Cette membrane hydrophobe 16 permet de laisser passer le flux d'air F mais pas les liquides.

### • Dissipateur thermique 11

Le dissipateur thermique 11 est illustré sur les figures 1 à 4, et 7 à 11.

Il est adapté pour dissiper thermiquement la chaleur dégagée par les sources lumineuses 12 hors du boîtier 10. Il peut également dissiper une partie de la chaleur dégagée par le dispositif de pilotage 13 (composants électroniques et carte à circuit imprimé sur laquelle reposent les composants électroniques) hors du boîtier 10.

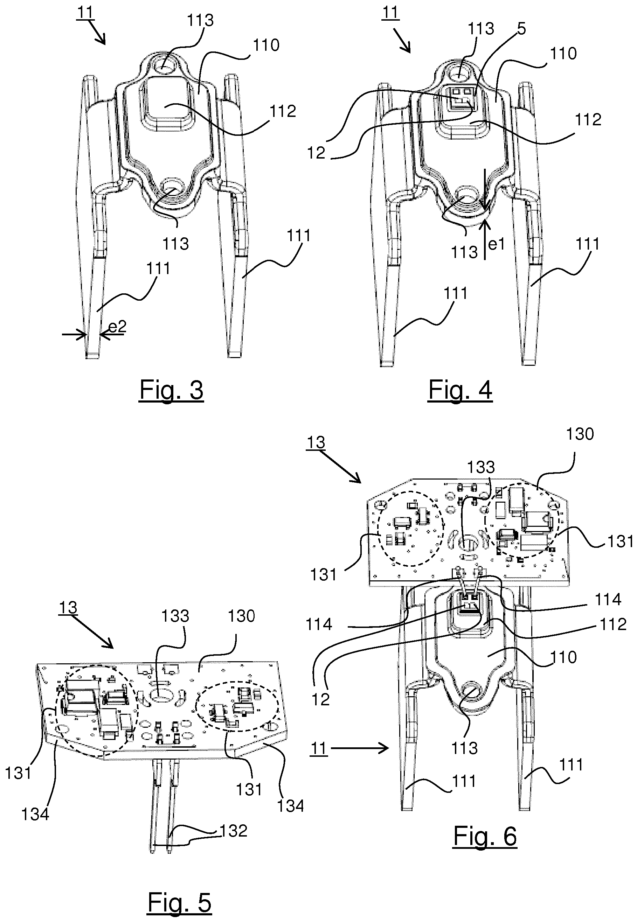

Le dissipateur thermique 11 permet également de positionner les sources lumineuses 12 par rapport à l'élément optique 14. Il sert ainsi d'indexation. Tel qu'illustré sur la figure 3, le dissipateur thermique 11 comprend :
- une partie centrale 110 ;
- deux parties latérales 111 qui s'étendent de part et d'autre de la partie centrale 110.

Dans un mode de réalisation non limitatif, la partie centrale 110 comprend une largeur sensiblement égale à 15mm et une longueur sensiblement égale à 30mm (millimètres). Dans un mode de réalisation non limitatif, la partie centrale 110 comporte une épaisseur e1 sensiblement égale à 2mm.

Dans un mode de réalisation non limitatif, les parties latérales 111 comprennent une largeur sensiblement égale à 34mm et une longueur sensiblement égale à 33mm. Dans un mode de réalisation non limitatif, les parties latérales 111 comportent une épaisseur e2 sensiblement égale à 1,8mm.

Les deux parties latérales 111 forment deux ailettes de dissipation.

Dans des modes de réalisation non limitatifs, le dissipateur thermique 11 comprend en outre :
- une partie plane 112 en protubérance sur la partie centrale 110 adaptée pour accueillir les sources lumineuses 12 ;
- au moins un orifice d'indexation 113. Dans un mode de réalisation non limitatif illustré, il y a deux orifices d'indexation 113. Les orifices d'indexation 113 sont adaptés pour positionner le dissipateur thermique 11 dans le moule qui va mouler le boîtier 10 et permettent de localiser l'emplacement des sources lumineuses 12 lors de leur collage sur le dissipateur thermique 11.

Selon l'invention, le dissipateur thermique 11 est en tôle. Il est ainsi facile à réaliser. Ainsi, la tôle peut être emboutie et pliée et découpée, ou découpée et emboutie, ou découpée et pliée etc. Par ailleurs, cela permet de rendre le dissipateur thermique 11 plus compact par rapport à un dissipateur thermique réalisé en aluminium injecté. Dans une variante de réalisation non limitative, la tôle est en aluminium. C'est un matériau léger et qui comporte de bonnes performances thermiques.

Le dissipateur thermique 11 est surmoulé avec ledit boîtier 10 tel qu'illustré sur les figures 9 et 10.

Ainsi, après la fabrication du dissipateur thermique 11, il est placé en insert dans un moule du boîtier 10, puis du plastique est injecté pour réaliser le boîtier 10. On obtient ainsi un ensemble boîtier 10 avec dissipateur thermique 11 surmoulé.

Ainsi, il n'est pas utile dans ce cas d'avoir une interface de fixation entre le boîtier et le dissipateur thermique comme dans l'état de la technique antérieur. On diminue ainsi le poids du dissipateur thermique 11, son encombrement ainsi que son coût de fabrication. On notera également que du fait de la suppression de cet interface de fixation, on a également supprimé un joint d'étanchéité en silicone, classiquement torique, qui était nécessaire entre ladite interface de fixation et le boîtier pour étanchéifier l'ensemble du dispositif lumineux. Par conséquent on a supprimé une étape de raccord mécanique pour un tel joint d'étanchéité. Dans un mode de réalisation non limitatif, on remplace ce joint d'étanchéité en silicone torique par un joint d'étanchéité 6 (illustré sur les figures 1 et 11) entre le boîtier 10 et le dissipateur thermique 11 qui est un cordon de colle (dans un exemple non limitatif) pour rattraper si besoin est les différences de dilatation entre ledit boîtier 10 et le dissipateur thermique 11 et par conséquent éviter le passage de liquide, tel que l'eau. Un cordon de colle est bien moins coûteux qu'un joint d'étanchéité en silicone torique et le procédé pour l'appliquer bien moins coûteux que celui pour l'assemblage d'un joint d'étanchéité en silicone torique.

### • Source lumineuse 12

Ladite au moins une source lumineuse 12 est illustrée sur les figures 1, 4, 7, 10 et 11.

Elle émet des rayons lumineux qui lorsqu'ils coopèrent avec l'élément optique 14 permettre de produire un faisceau lumineux du dispositif lumineux 1.

Dans un mode de réalisation non limitatif, ladite au moins une source lumineuse 12 est une source lumineuse à semi-conducteur.

Dans un mode de réalisation non limitatif, la source lumineuse à semi-conducteur fait partie d'une diode électroluminescente. Par diode électroluminescente, on entend tout type de diodes électroluminescentes, que ce soit dans des exemples non limitatifs des LED (« Light Emitting Diode »), une OLED (« Organic LED ») ou une AMOLED (« Active-Matrix-Organic LED »), ou encore une FOLED (« Flexible OLED »).

Dans un mode de réalisation non limitatif, le dispositif lumineux 1 comprend une pluralité de sources lumineuses 12. Dans l'exemple non limitatif de la figure 4, il comprend deux sources lumineuses 12.

Tel qu'illustré sur la figure 4, ces sources lumineuses 12 sont disposées directement sur le dissipateur thermique 11. En particulier, dans un mode de réalisation non limitatif, elles sont collées sur le dissipateur thermique 11 au moyen d'une colle 5 illustrée sur la figure 1. Le dissipateur thermique 11 sert ainsi de support pour les sources lumineuses 12.

Ainsi, le fait d'être montées directement sur le dissipateur thermique 11 et donc d'être en contact direct avec ledit dissipateur thermique 11 permet d'améliorer la dissipation thermique desdites sources lumineuses 12. Ainsi, on peut :
- utiliser des sources lumineuses 12 haute performance, tels que des sources lumineuses utilisées pour des feux antibrouillards. Dans un exemple non limitatif, les sources lumineuses 12 haute performance permettent d'émettre des rayons lumineux de 530 Lm (Lumens). On notera que pour un projecteur classique, la puissance est de 350 Lm.
- réduire la surface d'échange thermique du dissipateur thermique 11 avec les sources lumineuses 12. La taille du dissipateur thermique 11 peut ainsi être réduite (partie centrale 110 et ailettes 111).

Tel qu'illustré sur les figures 6 et 12, les sources lumineuses 12 sont reliées au dispositif de pilotage 13 chacune par un fil de connexion 114. Dans un exemple non limitatif le fil de connexion 114 est en aluminium.

Tel qu'illustré sur les figures 11 et 12, les sources lumineuses 12 sont disposées dans le boîtier 10 qui leur sert ainsi de protection.

### • Dispositif de pilotage 13

Le dispositif de pilotage 13 est illustré sur les figures 1, 5, et 11.

Le dispositif de pilotage 13 est adapté pour piloter l'alimentation électrique des sources lumineuses 12. A cet effet, le dispositif de pilotage 13 est relié électriquement aux sources lumineuses 12 via un ruban de connexion 114 (appelé en anglais « ribbon bonding ») pour chaque source lumineuse 12 illustrés sur les figures 6 et 12. Le pilotage de l'alimentation électrique étant connu de l'homme du métier, il n'est pas décrit ici.

Tel qu'illustré sur les figures 5 et 6, le dispositif de pilotage 13 comprend un support électronique 130 sur lequel sont disposés des composants électroniques 131 dont au moins un composant électronique de pilotage adapté pour le pilotage de l'alimentation électrique des sources lumineuses 12. Dans un mode de réalisation non limitatif, le dispositif de pilotage 13 est un convertisseur DC/DC, ou un dispositif de pilotage 13 résistif ou linéaire. Dans un mode de réalisation non limitatif, le dispositif de pilotage 13 peut comprendre des transistors MOSFET.

Les composants électroniques 131 sont disposés sur au moins une face du support électronique 130. Dans l'exemple non limitatif illustré sur les figures 5 et 6, ils sont disposés sur une seule face.

Le support électronique 130 est disposé dans ledit boîtier 10. En particulier, il repose sur la surface d'accueil 103' du boîtier 10.

Dans un mode de réalisation non limitatif, le support électronique 130 est une carte à circuit imprimé PCBA (« Printed Circuit Board Assembly » en anglais).

Par ailleurs, le dispositif de pilotage 13 comprend :
- un connecteur d'alimentation 132 adapté pour connecter le dispositif de pilotage 13 à une source d'alimentation du véhicule automobile via un connecteur client. Le connecteur d'alimentation 132 comprend deux broches une positive et une négative. Dans un exemple non limitatif, ladite source d'alimentation est une batterie 12V ; et
- un orifice de fixation 133 adapté pour accueillir une vis de fixation 3 (illustré sur la figure 6) pour sa fixation sur le boîtier 10 tel qu'illustré sur la figure 12. Le boîtier 10 sert ainsi de support pour ledit dispositif de pilotage 13.

Le dispositif de pilotage 13 est agencé de sorte à pouvoir s'intégrer dans ledit boîtier 10 tel qu'illustré sur la figure 12. A cet effet, dans l'exemple non limitatif illustré, il comprend une forme sensiblement rectangulaire avec deux bords 134 obliques de sorte à s'adapter à la forme arrondie du boîtier 10.

### • Elément optique 14

L'élément optique 14 est adapté pour répartir les rayons lumineux provenant des sources lumineuses 12 sur la route. Elle coopère ainsi avec les rayons lumineux des sources lumineuses 12 pour donner un faisceau lumineux qui éclaire la route.

Dans un exemple non limitatif l'élément optique 14 est une lentille et/ou un réflecteur et/ou un guide de lumière. Dans l'exemple non limitatif illustré, c'est une lentille.

L'élément optique 14 comprend une portion d'engrenage 140 (illustrée sur les figures 1 et 15) adaptée pour coopérer avec la vis d'engrenage 18 tel qu'illustré sur la figure 15.

La portion d'engrenage 140 est adaptée pour s'insérer dans l'orifice de passage 104 du boîtier 10 de sorte à coopérer avec ladite vis d'engrenage 18.

### • Vis d'engrenage 18

La vis d'engrenage 18 est adaptée pour régler la rotation de l'élément optique 14 de sorte à avoir une ligne de coupure du faisceau lumineux au niveau désiré par rapport à l'horizontale de la route. Elle rattrape ainsi les corrections d'assiette du véhicule automobile. Ladite vis d'engrenage 18 est adaptée pour être commandée manuellement par un tournevis ou par une visseuse. Elle permet un réglage par-dessous du dispositif lumineux 1.

Dans un mode de réalisation non limitatif, le dispositif lumineux 1 comprend en outre un pignon de réglage 19 illustré sur les figures 1 et 2, 13 et 14, adapté pour régler l'orientation de l'élément optique 14 depuis l'avant du dispositif lumineux 1. Le pignon de réglage 19 est adapté pour être commandé manuellement par les mêmes outils que la vis d'engrenage 18.

### • Masque 15 et glace 17

Le masque 15 a une fonction esthétique. Il a également une fonction mécanique, à savoir il permet de maintenir l'élément optique 14 en position dans le boîtier 10.

La glace 17 est en matériau plastique et est galbée. Elle permet de protéger les éléments dans le boîtier 10 contre les poussières et les infiltrations d'eau. Elle se visse sur le bord 100 du boîtier 10.

Bien entendu, la description de l'invention n'est pas limitée aux modes de réalisation décrits ci-dessus.

Ainsi, dans un mode de réalisation non limitatif, les composants électroniques 131 peuvent être disposés sur les deux faces du support électronique 130.

Ainsi, dans un mode de réalisation non limitatif, le boîtier 10 peut comprendre une forme autre qu'arrondie, par exemple sensiblement rectangulaire.

Ainsi, dans un mode de réalisation non limitatif, le dissipateur thermique 11 peut comprendre plus de deux ailettes 111.

Ainsi, dans un mode de réalisation non limitatif, un fil de connexion (appelé en anglais « wire bonding ») peut être utilisé à la place du ruban de connexion 114.

Ainsi, l'invention décrite présente notamment les avantages suivants :
- la dissipation thermique est meilleure grâce au montage des sources lumineuses 12 directement sur le dissipateur thermique 11 ;
- la dissipation thermique étant meilleure, elle permet de réduire les dimensions du dissipateur thermique 11, en particulier le nombre de ses ailettes, sa surface et son épaisseur. Son volume et son poids sont ainsi réduits et par conséquent son coût ;
- la possibilité de réduire les dimensions du dissipateur thermique 1 permet de réduire le coût et le poids du dissipateur thermique en utilisant un procédé de fabrication en tôle au lieu d'un procédé de fabrication par injection d'aluminium ;
- elle permet ainsi de réduire considérablement le coût du dissipateur thermique 11. La réduction du coût du dissipateur thermique 11 est sensiblement de 70% ;
- elle permet ainsi de réduire le volume et le poids du dissipateur thermique 11. Ainsi, la réduction du poids du dissipateur thermique 11 est sensiblement de 80% par rapport à un dissipateur thermique en aluminium injecté avec une pluralité d'ailettes ;
- elle permet de réduire la surface du support électronique 130 qui ne comporte plus les sources lumineuses 12, contrairement à l'état de la technique antérieur ;
- elle permet ainsi de réduire le volume, le poids, et le coût du dispositif lumineux 1 dans son ensemble par rapport à un dispositif lumineux qui comprend un dissipateur thermique en aluminium injecté avec une pluralité d'ailettes, une interface de fixation et un joint d'étanchéité en silicone torique ;
- elle permet d'avoir une résistance thermique plus faible du dispositif lumineux 1. En effet, dans l'état de la technique antérieur, la carte à circuit imprimé sur laquelle se trouvent les sources lumineuses n'est pas un bon conducteur de chaleur et constitue ainsi une barrière entre lesdites sources lumineuses et ledit dissipateur thermique pour la dissipation thermique desdites sources lumineuses. Dans le dispositif lumineux 1 décrit dans la description et objet de l'invention, la carte à circuit imprimé ne fait plus obstacle pour la conduction de chaleur entre les sources lumineuses 12 et le dissipateur thermique 11.

## Revendications

1. Dispositif lumineux (1) pour véhicule automobile, ledit dispositif lumineux (1) comprenant :
- un boitier (10) ;
- un dissipateur thermique (11) en tôle surmoulé avec ledit boitier (10) ;
- au moins une source lumineuse (12);
- un dispositif de pilotage (13) de l'alimentation électrique de ladite au moins une source lumineuse (12) disposé dans ledit boitier (10) et électriquement connecté à ladite source lumineuse (12) ;
- un élément optique (14) adapté pour coopérer avec des rayons lumineux émis par ladite au moins une source lumineuse (12),
le dispositif lumineux (1) étant **caractérisé en ce que** ladite au moins une source lumineuse (12) est disposée directement sur ledit dissipateur thermique (11) et ledit dispositif de pilotage (13) comprend un support électronique (130) disposé dans ledit boîtier (10), ce support électronique (130) reposant sur une surface d'accueil (103') du boîtier (10).

2. Dispositif lumineux (1) selon la revendication 1, dans lequel la tôle est en aluminium.

3. Dispositif lumineux (1) selon l'une des revendications 1 à 2, dans lequel ledit dispositif lumineux (1) est un feu antibrouillard et/ou un projecteur.

4. Dispositif lumineux (1) selon l'une des revendications 1 à 3, dans lequel ledit dissipateur thermique (11) comprend une partie centrale (110) et deux parties latérales (111).

5. Dispositif lumineux (1) selon la revendication 4, dans lequel la partie centrale (110) comprend une épaisseur sensiblement égale à 2mm, et les deux parties latérales (111) comprennent une épaisseur sensiblement égale à 1.8mm.

6. Dispositif lumineux (1) selon l'une des revendications 1 à 5, dans lequel ledit élément optique (14) est une lentille et/ou un réflecteur et/ou un guide de lumière.

7. Dispositif lumineux (1) selon l'une des revendications 1 à 6, dans lequel ladite au moins une source lumineuse (12) est une source lumineuse à semi-conducteur.

8. Dispositif lumineux (1) selon la revendication 7, dans lequel ladite au moins une source lumineuse à semi-conducteur (12) fait partie d'une diode électroluminescente.

9. Dispositif lumineux (1) selon l'une des revendications 1 à 8, dans lequel ledit dispositif lumineux (1) comprend une pluralité de sources lumineuses (12).

## Patentansprüche

1. Leuchtmodul (1) für Kraftfahrzeug, wobei das Leuchtmodul (1) umfasst:
- ein Gehäuse (10);
- einen Wärmeableiter (11) aus Blech, der am Gehäuse (10) angeformt ist;
- mindestens eine Lichtquelle (12);
- eine Steuervorrichtung (13) zur elektrischen Versorgung der mindestens einen Lichtquelle (12), die im Gehäuse (10) angeordnet und elektrisch mit der Lichtquelle verbunden ist (12);
- ein optisches Element (14), das dafür geeignet ist, mit Lichtstrahlen zusammenzuarbeiten, die von der mindestens einen Lichtquelle (12) ausgesendet werden,
wobei das Leuchtmodul (1) **dadurch gekennzeichnet ist, dass** die mindestens eine Leuchtquelle (12) direkt auf dem Wärmeableiter (11) angeordnet ist und die Steuervorrichtung (13) einen elektronischen Träger (130) umfasst, der im Gehäuse (10) angeordnet ist, wobei dieser elektronische Träger (130) auf einer Aufnahmefläche (103') des Gehäuses (10) aufliegt.

2. Leuchtmodul (1) nach Anspruch 1, wobei das Blech aus Aluminium ist.

3. Leuchtmodul (1) nach einem der Ansprüche 1 bis 2, wobei das Leuchtmodul (1) eine Nebelleuchte und/oder ein Scheinwerfer ist.

4. Leuchtmodul (1) nach einem der Ansprüche 1 bis 3, wobei der Wärmeableiter (11) einen mittleren Teil (110) und zwei seitliche Teile (111) umfasst.

5. Leuchtmodul (1) nach Anspruch 4, wobei der mittlere Teil (110) eine Dicke umfasst, die im Wesentlichen gleich 2 mm ist, und die beiden seitlichen Teile (111) eine Dicke umfassen, die im Wesentlichen gleich 1,8 mm ist.

6. Leuchtmodul (1) nach einem der Ansprüche 1 bis 5, wobei das optische Element (14) eine Linse und/oder ein Reflektor und/oder ein Lichtleiter ist.

7. Leuchtmodul (1) nach einem der Ansprüche 1 bis 6, wobei mindestens eine Lichtquelle (12) eine Halbleiter-Lichtquelle ist.

8. Leuchtmodul (1) nach Anspruch 7, wobei die mindestens eine Halbleiter-Lichtquelle (12) Teil einer Leuchtdiode ist.

9. Leuchtmodul (1) nach einem der Ansprüche 1 bis 8, wobei das Leuchtmodul (1) eine Vielzahl von Lichtquellen (12) umfasst.

## Claims

1. Light device (1) for a motor vehicle, said light device (1) comprising:
- a housing (10);
- a heat sink (11) made of sheet metal that is overmoulded with said housing (10);
- at least one light source (12);
- a control device (13) for the electrical power supply of said at least one light source (12) arranged in said housing (10) and electrically connected to said light source (12);
- an optical element (14) suitable for cooperating with light rays emitted by said at least one light source (12),
the lighting device being **characterized in that** the at least one light source (12) is arranged directly on said heat sink (11) and said control device (13) comprises an electronic support (130) arranged in said housing (10), this electronic support (130) resting on an accommodating surface (103') of the housing (10).

2. Light device (1) according to Claim 1, in which the sheet metal is made of aluminium.

3. Light device (1) according to one of Claims 1 to 2, in which said light device (1) is a fog light and/or a headlight.

4. Light device (1) according to one of Claims 1 to 3, in which said heat sink (11) comprises a central part (110) and two lateral parts (111).

5. Light device (1) according to Claim 4, in which the central part (110) has a thickness substantially equal to 2 mm, and the two lateral parts (111) have a thickness substantially equal to 1.8 mm.

6. Light device (1) according to one of Claims 1 to 5, in which said optical element (14) is a lens and/or a reflector and/or a light guide.

7. Light device (1) according to one of Claims 1 to 6, in which said at least one light source (12) is a semiconductor light source.

8. Light device (1) according to Claim 7, in which said at least one semiconductor light source (12) forms part of a light-emitting diode.

9. Light device (1) according to one of Claims 1 to 8, in which said light device (1) comprises a plurality of light sources (12).
